# EUROPÄISCHE PATENTSCHRIFT

(11) **EP 2 550 174 B1**
(45) Veröffentlichungstag und Bekanntmachung des Hinweises auf die Patenterteilung: **12.05.2021**
(21) Anmeldenummer: 11706758.7
(22) Anmeldetag: 02.03.2011
(51) Int. Cl.: B60L 53/12, B60L 53/124, B60L 53/126

(54) **SYSTEM ZUR BERÜHRUNGSLOSEN ENERGIEÜBERTRAGUNG AN EIN FAHRZEUG**
SYSTEM FOR CONTACTLESS TRANSMISSION OF ENERGY TO A VEHICLE
SYSTÈME DE TRANSFERT D'ÉNERGIE SANS CONTACT SUR UN VÉHICULE

(30) Priorität: 22.03.2010 DE 102010012356
(43) Veröffentlichungstag der Anmeldung: 30.01.2013
(73) Patentinhaber: SEW-EURODRIVE GmbH & Co. KG, 76646 Bruchsal (DE)
(72) Erfinder: SCHMIDT, Josef, 76676 Graben-Neudorf (DE); MAHLEIN, Jochen, 76139 Karlsruhe (DE); PODBIELSKI, Leobald, 76199 Karlsruhe (DE); EGGER, Björn, 76646 Bruchsal (DE)
(86) Internationale Anmeldenummer: PCT/EP2011/001017
(87) Internationale Veröffentlichungsnummer: WO 2011/116874

(56) Entgegenhaltungen:
- EP-A2- 0 788 212
- EP-A2- 0 788 212
- DE-A1-102006 012 562
- DE-A1-102006 012 562
- DE-A1-102007 033 654
- US-A1- 2003 030 411
- US-A1- 2008 297 107

## Beschreibung

Die Erfindung betrifft ein System zur berührungslosen Energieübertragung an ein Fahrzeug.

Zur Positionierung von Fahrzeugen sind GPS-Systeme bekannt.

**Aus der** EP 0 788 212 A2 **ist bekannt,** Energie induktiv an ein Fahrzeug zu übertragen **und Positionierungs-Sensorspulen vorzusehen.**

**Aus der** DE 10 2006 012 562 A1 **ist ein Spurführungssensorsystem bekannt.**

**Aus der** DE 10 2007 033 654 A1 **ist ein System zur induktiven Energieübertragung an ein Fahrzeug bekannt.**

**Aus der** US 2003/0030411 A1 **ist ebenfalls ein System zur induktiven Energieübertragung an ein Fahrzeug bekannt.**

**Aus der** US 2008 / 297107 A1 **ist eine Anordnung von mehreren Hilfsspulen um die Sekundärspule herum bekannt.**

Der Erfindung liegt daher die Aufgabe zugrunde, ein System zur berührungslosen Energieübertragung an ein Fahrzeug weiterzubilden.

Erfindungsgemäß wird die Aufgabe bei dem System zur berührungslosen Energieübertragung an ein Fahrzeug nach den in Anspruch 1 angegebenen Merkmalen gelöst.

Von Vorteil ist dabei, dass mittels der Hilfswicklungen der bei einer Fehlpositionierung durch die Hilfswicklungen durchtretende magnetische Fluss detektierbar ist, insbesondere der in verschiedenen Hilfswicklungen verschieden starke Fluss. Dies ist insbesondere dann in einfacher Weise ausführbar, wenn die Hilfswicklungen symmetrisch zur Hauptspule, insbesondere Primärwicklung oder Sekundärwicklung, positioniert sind, so dass in der optimalen Lage gleich große Spannungen induziert werden.

Bei einer vorteilhaften Ausgestaltung ist der Primärleiter im der Sekundärwicklung im Boden gegenüberliegenden Bereich derart ausgeformt und/oder verlegt, dass eine Vorzugsrichtung ausgeprägt ist, insbesondere wobei der Primärleiter in diesem Bereich symmetrisch zu einer Symmetrieachse angeordnet und ausgebildet ist, insbesondere wobei die Symmetrieachse in Vorzugsrichtung ausgerichtet ist. Von Vorteil ist dabei, dass bei symmetrischer Anordnung der Hilfswicklungen die Abweichung von der optimalen Lage durch unterschiedlich starke induzierte Spannungen in den verschiedenen Hilfswicklungen erkennbar ist.

Bei einer vorteilhaften Ausgestaltung sind die Hilfswicklungen derart angeordnet, dass das von dem mit Wechselstrom beaufschlagten Primärleiter erzeugte magnetische Wechselfeld in den Hilfswicklungen Spannung induziert, insbesondere zur Detektion der Abweichung des Fahrzeuges von derjenigen Position des Fahrzeugs, bei welcher Sekundärwicklung und Primärwicklung die stärkste induktive Kopplung aufweisen. Von Vorteil ist dabei, dass die Detektion in einfacher Weise ausführbar ist.

Bei einer vorteilhaften Ausgestaltung weist das Fahrzeug Räder auf, mit welchen es auf einem Boden verfahrbar ist, in oder auf welchem der Primärleiter angeordnet ist. Von Vorteil ist dabei, dass ein konstanter Abstand einhaltbar ist und somit trotz schwacher Kopplung durch resonante Übertragung ein hoher Wirkungsgrad erreichbar ist.

Bei einer vorteilhaften Ausgestaltung sind Hilfswicklungen und die Sekundärwicklung beziehungsweise Primärwicklung parallel zueinander angeordnet, insbesondere in derselben Ebene. Von Vorteil ist dabei, dass eine besonders einfache Herstellung und Kalibrierung ermöglicht ist.

Bei einer vorteilhaften Ausgestaltung sind Hilfswicklungen und die Sekundärwicklung beziehungsweise Primärwicklung nicht parallel zueinander angeordnet, insbesondere wobei Hilfswicklungen und die Sekundärwicklung beziehungsweise Primärwicklung senkrecht zueinander angeordnet sind. Von Vorteil ist dabei, dass Die Spulenwicklungsachsen senkrecht zueinander ausgerichtet sind und somit die Hilfswicklungen auf der von der Primärwicklung abgewandten Seite der Sekundärwicklung angeordnet sind.

Bei einer vorteilhaften Ausgestaltung sind zumindest eine erste und zweite Hilfswicklung gleichartig ausgeformt und bei gedachter Drehung um einen Winkelbetrag und gedachte Translation ineinander übergehen und/oder überführbar. Von Vorteil ist dabei, dass die beiden Hilfswicklungen zueinander verdreht angeordnet sind und somit entlang der jeweiligen Seite der Sekundärwicklung anordenbar sind. Insbesondere ist also die längere Seite der Hilfswicklung parallel zur längeren Seite der Sekundärwicklung anordenbar. Auf diese Weise ist eine höhere Empfindlichkeit erreichbar.

Bei einer vorteilhaften Ausgestaltung ist zumindest eine erste Hilfswicklung in Fahrrichtung vor der Sekundärwicklung beziehungsweise Primärwicklung angeordnet und zumindest eine weitere erste Hilfswicklung in Fahrrichtung hinter der Sekundärwicklung beziehungsweise Primärwicklung angeordnet und zumindest eine zweite Hilfswicklung seitlich rechts neben der Sekundärwicklung beziehungsweise Primärwicklung angeordnet und zumindest eine weitere zweite Hilfswicklung seitlich links neben der Sekundärwicklung beziehungsweise Primärwicklung angeordnet. Von Vorteil ist dabei, dass bei jeder Fehlpositionierung des Fahrzeugs am Boden, also innerhalb der zweidimensionalen Verfahrebene des Fahrzeugs, eine Detektion mittels der Hilfswicklungen ermöglicht ist. Insbesondere sind die Differenzen der gegenüberliegenden Hilfswicklungen, also derjenigen Hilfswicklungen, welche mittels der Sekundärwicklung voneinander beabstandet sind, auswertbar und somit eine weiter erhöhte Empfindlichkeit erreichbar.

Bei einer vorteilhaften Ausgestaltung ist zwischen zwei ersten Hilfswicklungen die Sekundärwicklung beziehungsweise Primärwicklung angeordnet, insbesondere wobei die Sekundärwicklung beziehungsweise Primärwicklung auch zwischen zwei weiteren Hilfswicklungen angeordnet ist, deren Verbindungslinie die Verbindungslinie der ersten Hilfswicklungen schneidet, insbesondere wobei die Verbindungslinien senkrecht zueinander stehen, insbesondere wobei die Verbindungslinien die jeweiligen Schwerpunkte der Hilfswicklungen schneiden. Von Vorteil ist dabei, dass wiederum die Erkennbarkeit von Verschiebungen des Fahrzeugs in beiden Dimensionen verbessert ist.

Bei einer vorteilhaften Ausgestaltung wird der Primärleiter mit einem mittelfrequenten Strom beaufschlagt, wobei der Sekundärwicklung eine derartige Kapazität in Reihe oder parallel zugeschaltet ist, dass die zugehörige Resonanzfrequenz der Mittelfrequenz im Wesentlichen gleicht. Von Vorteil ist dabei, dass ein hoher Wirkungsgrad trotz Luftspalt und dadurch bewirkter schwacher Kopplung erreichbar ist.

Bei einer vorteilhaften Ausgestaltung sind die Hilfswicklungen im Rückflussbereich des vom Primärleiter erzeugten Feldes angeordnet. Von Vorteil ist dabei, dass der Rückflussbereich nutzbar ist zur Bestimmung der Abweichung.

Bei einer vorteilhaften Ausgestaltung sind Sekundärwicklung und Primärwicklung parallel zueinander angeordnet sind. Von Vorteil ist dabei, dass eine verbesserte Kopplung und ein hoher Wirkungsgrad erreichbar sind, wobei die in den Hilfswicklungen induzierten Spannungen eineindeutig von der Verschiebung des Fahrzeugs aus der optimalen Position, also derjenigen Position mit der stärksten induktiven Kopplung, abhängen, insbesondere in jeder Verschiebungsrichtung.

Bei einer vorteilhaften Ausgestaltung sind die Hilfswicklungen am Fahrzeug angeordnet oder am Boden angeordnet. Von Vorteil ist dabei, dass bei Anordnung am Fahrzeug eine Auswerteelektronik am Fahrzeug vorzusehen ist und bei Anordnung im Boden die Auswerteelektronik im Boden vorsehbar ist, wobei allerdings eine Datenübertragung, beispielsweise durch hochfrequente Aufmodulation auf den in den Primärleiter eingeprägten mittelfrequenten Strom, vorgesehen werden muss.

Bei einer vorteilhaften Ausgestaltung werden die Signale, insbesondere die induzierten Spannungen, der Hilfswicklungen einer Auswerteeinheit zugeführt, die mit einem Mittel zur Anzeige einer Fehlpositionierung der Sekundärwicklung zum Primärleiter verbunden ist und/oder mit einem Mittel zur Einparkhilfe oder mit einer Einparksteuerung. Von Vorteil ist dabei, dass ein automatisches Einparken, also Hinsteuern des Fahrzeuges auf die optimale Lage ermöglicht ist, also auf die Position mit der stärksten induktiven Kopplung zwischen Primärwicklung und Sekundärwicklung. Alternativ ist auch ein halbautomatisches Verfahren realisierbar, wie akustisches und/oder optisches Anzeigen der Abweichung als Einparkhilfe für den Fahrer des Fahrzeugs.

Bei einer vorteilhaften Ausgestaltung wird zumindest eine der Hilfswicklungen mit einem weiteren Stromanteil beaufschlagt, insbesondere mit einem hochfrequenten Stromanteil, insbesondere einem höher als die Mittelfrequenz frequenten Stromanteil, zur Datenübertragung,

insbesondere wobei der weitere Stromanteil eine Trägerfrequenz von mehr als einem Megahertz aufweist. Von Vorteil ist dabei, dass eine Datenübertragung in einfacher Weise ausführbar ist, wobei die Hilfswicklungen nicht nur der Detektion der Abweichung von der optimalen Position des Fahrzeugs, sondern als weitere Funktion das Senden und/oder Empfangen von Datenströmen ausführen.

Bei einer vorteilhaften Ausgestaltung ist der zur Datenübertragung vorgesehenen, mit der Sekundärwicklung verbundenen Hilfswicklung eine mit dem Primärleiter fest verbundene Hilfswicklung zugeordnet, wobei der Abstand dieser Hilfswicklungen zueinander kleiner ist als der Abstand von der zur Datenübertragung vorgesehenen Hilfswicklung zu anderen Wicklungen, insbesondere in der optimalen Position, also derjenigen Position des Fahrzeugs, bei welcher die stärkste induktive Kopplung des Primärleiters zur Sekundärwicklung vorliegt. Von Vorteil ist dabei, dass somit über die beiden Hilfswicklungen eine Datenübertragung ermöglicht ist, insbesondere in einem Raumbereich um die optimale Position herum. Somit ist das Einparken automatisiert oder halbautomatisiert ausführbar.

### Erfindungsgemäß wird

zumindest eine der Hilfswicklungen mit einem Stromanteil beaufschlagt, dessen Frequenzbereich außerhalb der vorgenannten Stromanteile, insbesondere also Mittelfrequenz beziehungsweise Frequenz zur Datenübertragung, angeordnet ist, wobei
aus der jeweiligen zugehörigen, an der Hilfswicklung anliegenden Spannung, welche zusammen mit dem Stromanteil erfasst wird, insbesondere mit der zugehörigen Phasenverschiebung, die Induktivität der jeweiligen Hilfswicklung bestimmt wird und daraus das Eindringen und/oder Vorhandensein von metallischen Fremdkörpern im Bereich zwischen Hilfswicklung und Primärleiter detektiert wird. Von Vorteil ist dabei, dass die Sicherheit weiter erhöhbar ist, da die Hilfswicklungen metallische Körper detektierbar machen. Denn metallische Körper werden bei der Leistungsübertragung von Wirbelströmen erhitzt und können unter Umständen somit Feuerbrand auslösen. Mittels der Detektion der Körper ist somit die Brandgefahr reduzierbar. Darüber hinaus ist sogar die Sorte des Metalls detektierbar, indem die frequenzabhängigen Materialkennlinien bestimmt werden. Daher ist in Weiterbildung sogar die Temperatur des Metallkörpers bestimmbar und bei Temperaturen über einer kritischen Temperatur, beispielsweise 80° Celsius oder 120° Celsius eine sicherheitsgerichtete Abschaltung der Energieübertragung ausführbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten im Rahmen der beigefügten Patentansprüche.

Die Erfindung wird nun anhand von Abbildungen näher erläutert:
In der Figur 1 ist eine erfindungsgemäße Spulenanordnung in Schrägansicht gezeigt.
In der Figur 2 ist die erfindungsgemäße Spulenanordnung in Draufsicht gezeigt.
In der Figur 3 ist die zugehörige Signalverarbeitung schematisch skizziert.

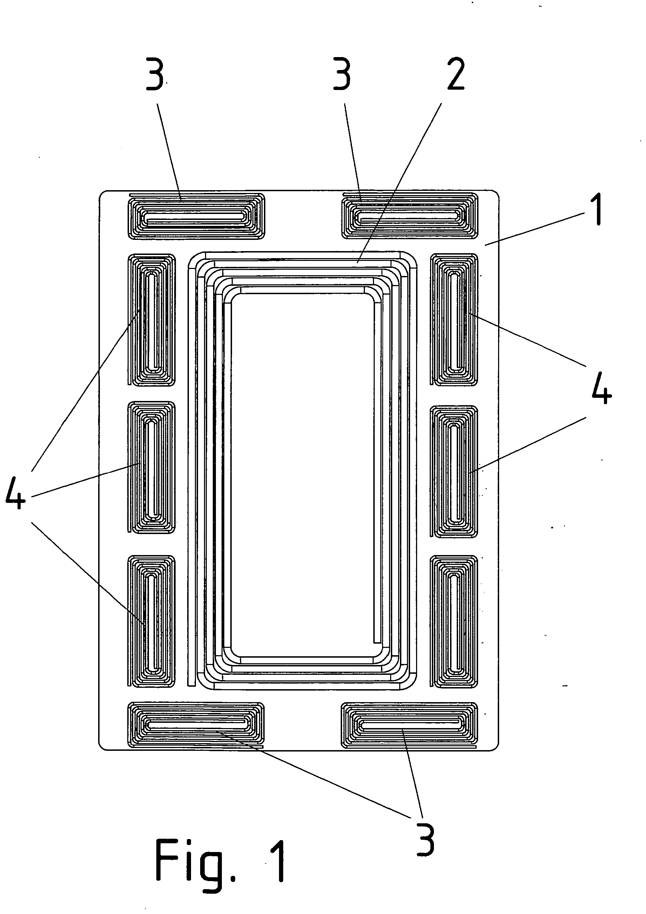

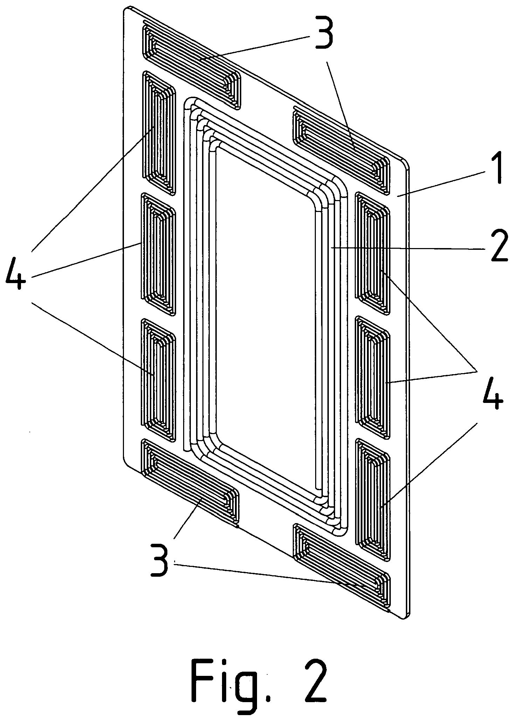

Wie in Figur 1 und 2 gezeigt ist auf einem Träger 1 eine Sekundärwicklung 2 mit ersten Hilfswicklungen 3 und senkrecht hierzu orientierten Hilfswicklungen 4 vorgesehen.

Diese Spulenanordnung ist am Unterboden eines Fahrzeuges vorsehbar, dem über eine induktive Kopplung von einem Primärleiter aus der Sekundärwicklung 2 Energie zuführbar ist. Dabei ist der Primärleiter im Boden verlegt, wobei das Fahrzeug mittels Rädern auf dem Boden verfahrbar ist.

In einer ersten Variante ist der Primärleiter langgestreckt entlang der Fahrbahn im Boden verlegt und das Fahrzeug entnimmt während der Bewegung entlang der Fahrbahn Energie, wobei Sekundärwicklung und Primärleiter induktiv nur schwach gekoppelt sind. Zur Erreichung eines hohen Wirkungsgrades ist der Primärleiter mit einem mittelfrequenten Strom beaufschlagt, wobei der Sekundärwicklung 2 eine Kapazität derart in Reihe oder parallel zugeschaltet ist, dass die zugehörige Resonanzfrequenz der Mittelfrequenz entspricht. Die Mittelfrequenz hat einen Wert zwischen 10 und 500 kHz, vorzugsweise zwischen 15 und 100 kHz.

Mittels der Hilfsspulen (3, 4) ist eine Spurführung des Fahrzeuges realisierbar, da bei Abweichungen des Primärleiters aus der die Symmetrieachse der Spulenanordnung enthaltenden, senkrecht zur ebenen Spulenanordnung ausgerichteten Ebene sich unterschiedliche Induktionsspannungen in den Hilfsspulen (3, 4) ergeben.

Da am äußeren Umfang der Sekundärwicklung die Hilfsspulen in verschiedenen Positionen und Orientierungen vorgesehen sind, ist die Fehlorientierung des Fahrzeuges zum Primärleiter erkennbar.

In einer zweiten Variante ist statt des langgestreckten Primärleiters eine Primärwicklung im Boden verlegt. Auf diese Weise ist eine Elektrotankstelle bereitstellbar. Denn das Fahrzeug ist mit seiner Sekundärwicklung über der Primärwicklung positionierbar und somit der Energiespeicher, beispielsweise ein Hochvoltakkumulator, mit Energie auffüllbar. Hierzu ist die Primärwicklung ebenfalls als Wicklung mit mehreren Windungen ausgeführt, wobei allerdings zwischen der Primärwicklung und der Sekundärwicklung ein Luftspalt vorhanden ist. Auch wenn die bodenverlegte Primärwicklung mit einem Spulenkern ausgestattet ist, der einen Mittelschenkel aufweist, um den die Primärwicklung gewickelt ist, und wenn auch um die Sekundärwicklung ein solcher Spulenkern, vorzugsweise aus Ferritmaterial, vorgesehen wird, bleibt ein Luftspalt vorhanden, der die induktive Kopplung schwächt. Wiederum zur Erreichung eines hohen Wirkungsgrades ist die genannte Kapazität der Sekundärwicklung zugeschaltet in der genannten Dimensionierung.

Die Sekundärwicklung und vorzugsweise auch die Primärwicklung sind als Flachwicklungen aus Litzenleitung ausgeführt, wobei die Litzenleitung aus einzelnen jeweils gegeneinander elektrisch isolierten Einzellitzendrähten zusammengesetzt ist. Diese sogenannte HF-Litze ermöglicht eine Verringerung von Verlusten.

Die Sekundärwicklung ist vorzugsweise als Flachwicklung ausgeführt, insbesondere als rechteckförmige Flachwicklung.

In einer weiteren erfindungsgemäßen Ausführungsform sind die Hilfswicklungen (3,4) mittels Leiterbahnen einer als Träger 1 vorgesehenen, mehrlagigen Leiterplatte ausgeführt und somit kostengünstig fertigbar. Die Sekundärwicklung 2 ist bei kleinen zu übertragenden Leistungen auch als Leiterbahn auf einer solchen Leiterplatte ausführbar, jedoch ist bei hohen zu übertragenden Leistungen die obengenannte Ausführung mit HF-Litze bevorzugt.

Wie in Figur 1 und 2 gezeigt, sind die Sekundärwicklung und die Hilfsspulen (3, 4) in einer übereinstimmenden Ebene angeordnet.

In einem weiteren erfindungsgemäßen Ausführungsbeispiel ist auch eine Anordnung der Hilfsspulen (3, 4) in einer Ebene, die parallel zu derjenigen Ebene ausgerichtet ist, in welcher die Sekundärwicklung vorgesehen ist. Die beiden ebenen Anordnungen dürfen dann also einen nicht verschwindenden Abstand aufweisen, wobei bevorzugt die Ebene der Hilfsspulen (3, 4) weiter beabstandet ist von der Primärwicklung als die Ebene der Sekundärwicklung.

In einem weiteren erfindungsgemäßen Ausführungsbeispiel ist auch eine Anordnung der Hilfsspulen (3, 4) vorsehbar, wobei eine die jeweilige Hilfsspule 3 oder 4 aufnehmende Ebene senkrecht zu derjenigen Ebene ausgerichtet ist, in welcher die Sekundärwicklung vorgesehen ist. Der Schwerpunkt der Hilfsspulen ist bevorzugt in der Ebene der Sekundärwicklung angeordnet. In einer weiteren Variante ist aber auch eine Beabstandung des Schwerpunktes der jeweiligen Hilfsspule von der Ebene der Sekundärwicklung vorteilhaft, wobei der Schwerpunkt der jeweiligen Hilfsspule (3, 4) weiter beabstandet ist von der Ebene der Primärwicklung als die Ebene der Sekundärwicklung.

Bei allen Varianten ist bevorzugt ein erster Teil der Hilfswicklungen 3 senkrecht zu einem zweiten Teil der Hilfswicklungen 4 ausgerichtet. Auf diese Weise sind relative Verschiebungen der Sekundärwicklung zur Primärwicklung, also Abweichungen aus der symmetrischen und somit optimalen Lage in zwei Richtungen besonders einfach und gut detektierbar. In der symmetrischen Lage ist der optimale Wirkungsgrad erreichbar.

Der Anteil des von der Primärwicklung erzeugten Hauptflusses, welcher die Hilfsspulen durchflutet, steigt mit zunehmender Abweichung aus der symmetrischen also optimalen Lage. Die Hilfsspulen sind außerhalb der Sekundärwicklung angeordnet und befinden sich somit im Rückflussbereich des von der Primärwicklung erzeugten Hauptflusses, wenn die Primärwicklung im Wesentlichen gleich oder ähnlich groß ist wie die Sekundärwicklung.

Bevorzugt sind vier Hilfsspulen vorgesehen, die in den Eckbereichen der Sekundärwicklung angeordnet sind.

Primärwicklung und Sekundärwicklung sind vorzugsweise gleichartig ausgeformt oder zumindest ähnlich. Bevorzugt sind sie gleichgroß ausgeführt.

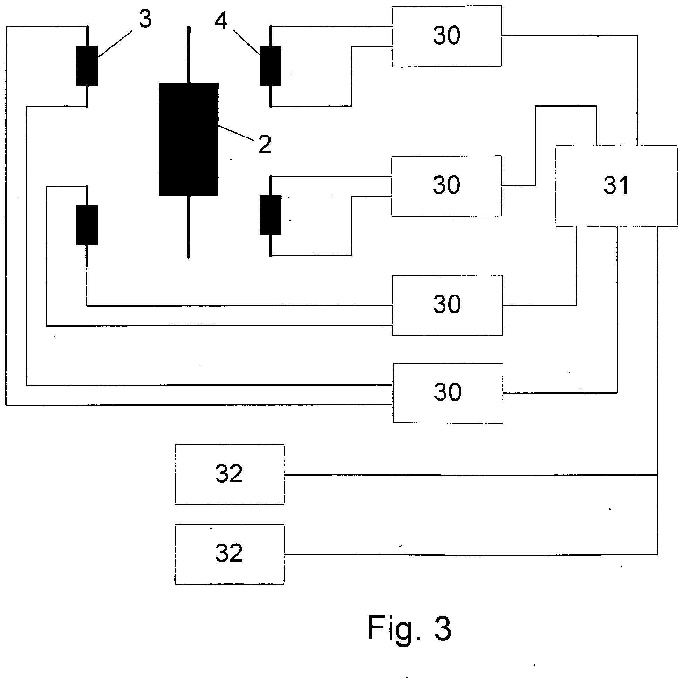

Wie in Figur 3 gezeigt, werden die in den Hilfsspulen (3, 4) induzierten mittelfrequenten Spannungen einer jeweiligen Signalaufbereitung 30 zugeführt, die insbesondere eine Filterung und Analog-Digital-Wandlung der Signale ausführt. Die somit digitalen Signalströme werden einem Rechner 31 zugeführt, der einen Mikrocontroller aufweist und die Signalströme weiterverarbeitet.

Der Rechner 31 ist mit einem Anzeigemittel 32 verbunden zur Anzeige der Fehlorientierung und mit einer Einparkvorrichtung 33. Mittels dieser Einparkvorrichtung ist ein selbsttätiges Ansteuern der optimalen Lage ermöglicht, wobei die Steuerung der Antriebe des Fahrzeugs von einem weiteren Rechner derart ausgeführt wird, dass die optimale Lage erreichbar ist. Alternativ ist auch die Einparkvorrichtung 33 auch nur als Einparkhilfe ausführbar, die dem Fahrer des Fahrzeuges durch akustische und/oder optische Anzeige beim Anfahren der optimalen Lage unterstützt.

In einem weiteren erfindungsgemäßen Ausführungsbeispiel ist im Boden eine Mulde ausgeführt, so dass das Fahrzeug mit seinen Vorderrädern selbsttätig in die optimale Position in einer ersten Richtung einrollt. Zur Erreichung der optimalen Position in Querrichtung ist dann nur ein geringfügiges Hin- und Her Bewegen des Fahrzeuges notwendig, wobei die Lenkräder in entsprechende Lenkwinkel ausgerichtet werden.

In einem weiteren erfindungsgemäßen Ausführungsbeispiel sind die Hilfsspulen statt mit der Sekundärwicklung mit der Primärwicklung fest verbunden. Somit ist bei Nichtvorhandensein des Fahrzeugs die Primärwicklung mit einem Testsignalwechselstrom oder Testpuls beaufschlagbar, so dass eine entsprechende Spannung in der Hilfswicklung induziert wird. Sobald das Fahrzeug eintrifft und insbesondere mit seiner Sekundärwicklung samt zugehörigem Spulenkern, insbesondere Ferritkern, in den empfindlichen Bereich der Wicklungsanordnung eintritt, ändert sich die als Antwort auf den Testpuls oder Testwechselstrom induzierte Spannung. Durch Auswerten der in den jeweiligen Hilfswicklungen induzierten Spannungen ist es ermöglicht, die Abweichungen des Fahrzeugs von derjenigen Position anzuzeigen, in welcher die stärkste induktive Kopplung zwischen Sekundärwicklung und Primärwicklung auftritt. Außerdem ist es ermöglicht einer Regeleinheit die Spannungssignale zuzuführen, die die Position des Fahrzeuges auf diejenige Position hin regelt, bei der die in die zur Primärwicklung symmetrisch angeordneten Hilfswicklungen induzierten Spannungen sich gleichen. Somit ist ein Hinsteuern des Fahrzeugs zur optimalen Position ermöglicht.

Bei symmetrischer Anordnung der Hilfswicklungen ist eine besonders einfache Bestimmung der Abweichung ermöglicht, da nur Summe oder Differenz der Spannungen von je zwei Hilfswicklungen zu bilden ist und Fehler verringert werden.

### Bezugszeichenliste

1 Träger
2 Sekundärwicklung
3 Hilfswicklung
4 Hilfswicklung
30 Signalaufbereitung, insbesondere umfassend Filterung und Analog-Digital-Wandlung
31 Rechner, insbesondere umfassend einen Mikrocontroller
32 Anzeigemittel
33 Einparkvorrichtung

## Patentansprüche

1. System zur berührungslosen Energieübertragung an ein Fahrzeug,
wobei ein Primärleiter, insbesondere ein bodenverlegter Primärleiter, induktiv koppelbar ist an eine Sekundärwicklung (2) des Fahrzeugs, wobei der Primärleiter als Primärwicklung ausgeführt ist,
**wobei** Hilfswicklungen (3, 4), insbesondere zur Detektion von Abweichungen zur optimalen Ausrichtung und/oder Positionierung des Fahrzeugs relativ zum Primärleiter, vorgesehen sind,
wobei die Hilfswicklungen (3, 4) außerhalb der Sekundärwicklung (2) oder Primärwicklung angeordnet sind,
insbesondere wobei die Hilfswicklungen (3, 4) eine Anordnung mit Spiegelsymmetrie oder diskreter Rotationssymmetrie bilden,
**wobei das System ein Mittel umfasst, welches dazu ausgebildet ist, den Primärleiter mit einem mittelfrequenten Strom zu beaufschlagen,**
**dadurch gekennzeichnet, dass**
**und daraus das Eindringen und/oder Vorhandensein von metallischen Fremdkörpern im Bereich zwischen Hilfswicklung (3, 4) und Primärleiter zu detektieren,**
**wobei der Rechner (31) dazu ausgebildet ist, mittels frequenzabhängiger Materialkennlinien die Sorte des Metalls zu bestimmen und die Temperatur des jeweiligen Metalls zu bestimmen**
**und auch die Temperatur des zur Energieübertragung verwendeten Metalls, also die Temperatur des Primärleitermaterials und/oder Sekundärwicklungsmaterials, zu bestimmen.**

2. System nach Anspruch 1,
**dadurch gekennzeichnet, dass**
der Primärleiter im der Sekundärwicklung (2) im Boden gegenüberliegenden Bereich derart ausgeformt und/oder verlegt ist, dass eine Vorzugsrichtung ausgeprägt ist, insbesondere wobei der Primärleiter in diesem Bereich symmetrisch zu einer Symmetrieachse angeordnet und ausgebildet ist, insbesondere wobei die Symmetrieachse in Vorzugsrichtung ausgerichtet ist.

3. System nach mindestens einem der vorangegangenen Ansprüche,
**dadurch gekennzeichnet, dass**
die Hilfsspulen derart angeordnet sind, dass das von dem mit Wechselstrom beaufschlagten Primärleiter erzeugte magnetische Wechselfeld in den Hilfswicklungen (3, 4) Spannung induziert, insbesondere zur Detektion der Abweichung des Fahrzeuges von derjenigen Position des Fahrzeugs, bei welcher Sekundärwicklung (2) und Primärwicklung die stärkste induktive Kopplung aufweisen.

4. System nach mindestens einem der vorangegangenen Ansprüche,
**dadurch gekennzeichnet, dass**
**das Fahrzeug Räder aufweist, mit welchen es auf einem Boden verfahrbar ist, in oder auf welchem der Primärleiter angeordnet ist.**

5. System nach mindestens einem der vorangegangenen Ansprüche,
**dadurch gekennzeichnet, dass**
Hilfswicklungen (3, 4) und die Sekundärwicklung (2) beziehungsweise Primärwicklung parallel zueinander angeordnet sind, insbesondere in derselben Ebene.

6. System nach mindestens einem der vorangegangenen Ansprüche,
**dadurch gekennzeichnet, dass**
Hilfswicklungen (3, 4) und die Sekundärwicklung (2) beziehungsweise Primärwicklung nicht parallel zueinander angeordnet sind, insbesondere wobei Hilfswicklungen (3, 4) und die Sekundärwicklung (2) beziehungsweise Primärwicklung senkrecht zueinander angeordnet sind.

7. System nach mindestens einem der vorangegangenen Ansprüche,
**dadurch gekennzeichnet, dass**
zumindest eine erste und zweite Hilfswicklung (3, 4) gleichartig ausgeformt und bei gedachter Drehung um einen Winkelbetrag und gedachte Translation ineinander übergehen und/oder überführbar sind.

8. System nach mindestens einem der vorangegangenen Ansprüche,
**dadurch gekennzeichnet, dass**
zumindest eine erste Hilfswicklung (3) in Fahrrichtung vor der Sekundärwicklung (2) beziehungsweise Primärwicklung angeordnet ist und
zumindest eine weitere erste Hilfswicklung (3) in Fahrrichtung hinter der Sekundärwicklung (2) beziehungsweise Primärwicklung angeordnet ist und
zumindest eine zweite Hilfswicklung (4) seitlich rechts neben der Sekundärwicklung (2) beziehungsweise Primärwicklung angeordnet ist und
zumindest eine weitere zweite Hilfswicklung (4) seitlich links neben der Sekundärwicklung (2) beziehungsweise Primärwicklung angeordnet ist.

9. System nach mindestens einem der vorangegangenen Ansprüche,
**dadurch gekennzeichnet, dass**
zwischen zwei ersten Hilfswicklungen (3, 4) die Sekundärwicklung (2) beziehungsweise Primärwicklung angeordnet ist, insbesondere wobei die Sekundärwicklung (2) beziehungsweise Primärwicklung auch zwischen zwei weiteren Hilfswicklungen (3, 4) angeordnet ist, deren Verbindungslinie die Verbindungslinie der ersten Hilfswicklungen (3, 4) schneidet, insbesondere wobei die Verbindungslinien senkrecht zueinander stehen, insbesondere wobei die Verbindungslinien die jeweiligen Schwerpunkte der Hilfswicklungen (3, 4) schneiden.

10. System nach mindestens einem der vorangegangenen Ansprüche,
**dadurch gekennzeichnet, dass**
**der Sekundärwicklung (2) eine derartige Kapazität in Reihe oder parallel zugeschaltet ist, dass die zugehörige Resonanzfrequenz der Mittelfrequenz im Wesentlichen gleicht.**

11. System nach mindestens einem der vorangegangenen Ansprüche,
**dadurch gekennzeichnet, dass**
die Hilfswicklungen (3, 4) im Rückflussbereich des vom Primärleiter erzeugten Feldes angeordnet sind.

12. System nach mindestens einem der vorangegangenen Ansprüche,
**dadurch gekennzeichnet, dass**
Sekundärwicklung (2) und Primärwicklung parallel zueinander angeordnet sind
und/oder dass
die Hilfswicklungen (3, 4) am Fahrzeug angeordnet oder am Boden angeordnet sind.

13. System nach mindestens einem der vorangegangenen Ansprüche,
**dadurch gekennzeichnet, dass**
die Signale, insbesondere die induzierten Spannungen, der Hilfswicklungen (3, 4) einer Auswerteeinheit zugeführt werden, die mit einem Mittel zur Anzeige einer Fehlpositionierung der Sekundärwicklung (2) zum Primärleiter verbunden ist und/oder mit einem Mittel zur Einparkhilfe oder mit einer Einparksteuerung.

14. System nach mindestens einem der vorangegangenen Ansprüche,
**dadurch gekennzeichnet, dass**
zumindest eine der Hilfswicklungen (3, 4) mit einem weiteren Stromanteil beaufschlagt wird, insbesondere mit einem hochfrequenten Stromanteil, insbesondere einem höher als die Mittelfrequenz frequenten Stromanteil, zur Datenübertragung,
insbesondere wobei der weitere Stromanteil eine Trägerfrequenz von mehr als einem Megahertz aufweist,
und/oder dass
der zur Datenübertragung vorgesehenen Hilfswicklung (3, 4) eine mit dem Primärleiter fest verbundene Hilfswicklung (3, 4) zugeordnet ist, wobei der Abstand dieser Hilfswicklungen (3, 4) zueinander kleiner ist als der Abstand von der zur Datenübertragung vorgesehenen Hilfswicklung (3, 4) zu anderen Wicklungen, insbesondere in der optimalen Position, also derjenigen Position des Fahrzeugs, bei welcher die stärkste induktive Kopplung des Primärleiters zur Sekundärwicklung (2) vorliegt.

## Claims

1. A system for contactless energy transmission to a vehicle,
wherein a primary conductor, in particular an underground primary conductor, can be inductively coupled to a secondary winding (2) of the vehicle,
wherein the primary conductor is configured as a primary winding,
wherein auxiliary windings (3, 4), in particular for the detection of deviations from the optimum orientation and/or positioning of the vehicle relative to the primary conductor, are provided, wherein the auxiliary windings (3, 4) are arranged exterior to the secondary winding (2) or primary winding,
in particular wherein the auxiliary windings (3, 4) form an arrangement with mirror symmetry or discrete rotational symmetry,
wherein the system comprises a means which is configured to act upon the primary conductor with a medium-frequency current,
**characterised in that**
the system comprises a further means which is configured to act upon at least one of the auxiliary windings (3, 4) with a current component whose frequency range is arranged outside of the frequency of the medium-frequency current, wherein the system comprises a computer (31) which is configured to determine the inductance of the respective auxiliary winding (3, 4) from the respective associated voltage present at the auxiliary winding (3, 4) and from the current component and to detect therefrom the penetration and/or presence of metallic foreign bodies in the region between auxiliary winding (3, 4) and primary conductor,
wherein the computer (31) is configured to determine the type of metal by means of frequency-dependent material characteristics and to determine the temperature of the respective metal and also to determine the temperature of the metal used for energy transmission, therefore the temperature of the primary conductor material and/or secondary winding material.

2. A system according to claim 1,
**characterised in that**
the primary conductor is formed and/or laid in such a manner in the ground region opposite the secondary winding (2) that there is a pronounced preferred direction, in particular wherein the primary conductor is in this region arranged and configured symmetrically to an axis of symmetry, in particular wherein the axis of symmetry is oriented in the preferred direction.

3. A system according to at least one of the preceding claims,
**characterised in that**
the auxiliary coils are arranged in such a manner that the magnetic alternating field generated by the primary conductor acted upon by alternating current induces voltage in the auxiliary windings (3, 4), in particular for detection of the deviation of the vehicle from that position of the vehicle in which secondary winding (2) and primary winding have the strongest inductive coupling.

4. A system according to at least one of the preceding claims,
**characterised in that**
the vehicle has wheels with which it can move on ground in or on which the primary conductor is arranged.

5. A system according to at least one of the preceding claims,
**characterised in that**
auxiliary windings (3, 4) and the secondary winding (2) or primary winding are arranged parallel to one another, in particular in the same plane.

6. A system according to at least one of the preceding claims,
**characterised in that**
auxiliary windings (3, 4) and the secondary winding (2) or primary winding are not arranged parallel to one another, in particular wherein auxiliary windings (3, 4) and the secondary winding (2) or primary winding are arranged perpendicularly to one another.

7. A system according to at least one of the preceding claims,
**characterised in that**
at least one first and second auxiliary winding (3, 4) are formed identically and merge into one another and/or are transferrable into one another upon notional rotation by an angular amount and notional translation.

8. A system according to at least one of the preceding claims,
**characterised in that**
at least one first auxiliary winding (3) is arranged upstream of the secondary winding (2) or primary winding in the direction of travel and
at least one further first auxiliary winding (3) is arranged downstream of the secondary winding (2) or primary winding in the direction of travel and
at least one second auxiliary winding (4) is arranged laterally alongside the secondary winding (2) or primary winding, to the right thereof and
at least one further second auxiliary winding (4) is arranged laterally alongside the secondary winding (2) or primary winding, to the left thereof.

9. A system according to at least one of the preceding claims,
**characterised in that**
the secondary winding (2) or primary winding is arranged between two first auxiliary windings (3, 4), in particular wherein the secondary winding (2) or primary winding is also arranged between two further auxiliary windings (3, 4) whose connecting line intersects the connecting line of the first auxiliary windings (3, 4), in particular wherein the connecting lines are perpendicular to one another, in particular wherein the connecting lines intersect the respective gravity centres of the auxiliary windings (3, 4).

10. A system according to at least one of the preceding claims,
**characterised in that**
a capacitor such that the associated resonance frequency substantially equals the medium frequency is connected in series or in parallel to the secondary winding (2).

11. A system according to at least one of the preceding claims,
**characterised in that**
the auxiliary windings (3, 4) are arranged in the backflow region of the field generated by the primary conductor.

12. A system according to at least one of the preceding claims,
**characterised in that**
secondary winding (2) and primary winding are arranged parallel to one another and/or **in that**
the auxiliary windings (3, 4) are arranged on the vehicle or on the ground.

13. A system according to at least one of the preceding claims,
**characterised in that**
the signals, in particular the induced voltages, of the auxiliary windings (3, 4) are fed to an evaluation unit which is connected to a means of displaying an incorrect positioning of the secondary winding (2) with respect to the primary conductor and/or connected to a means for parking assistance or connected to a parking control means.

14. A system according to at least one of the preceding claims,
**characterised in that**
at least one of the auxiliary windings (3, 4) is acted upon by a further current component, in particular by a high-frequency current component, in particular a current component with a frequency higher than the medium frequency, for data transmission,
in particular wherein the further current component has a carrier frequency of more than one megahertz,
and/orinthat
an auxiliary winding (3, 4) securely connected to the primary conductor is associated with the auxiliary winding (3, 4) provided for data transmission, wherein the spacing of these auxiliary windings (3, 4) from one another is smaller than the spacing of the auxiliary winding (3, 4) provided for data transmission from other windings, in particular in the optimum position, therefore that position of the vehicle in which there is the strongest inductive coupling of the primary conductor to the secondary winding (2).

## Revendications

1. Système de transmission d'énergie sans contact à un véhicule,
un conducteur primaire, notamment un conducteur primaire posé au sol, pouvant être couplé de manière inductive à un enroulement secondaire (2) du véhicule,
le conducteur primaire étant réalisé sous la forme d'un enroulement primaire,
des enroulements auxiliaires (3, 4), notamment destinés à la détection d'écarts par rapport à une orientation et/ou un positionnement optimal du véhicule par rapport au conducteur primaire, étant présents,
les enroulements auxiliaires (3, 4) étant disposés en-dehors de l'enroulement secondaire (2) ou de l'enroulement primaire,
les enroulements auxiliaires (3, 4) formant notamment un arrangement ayant une symétrie en miroir ou une symétrie de rotation discrète,
le système comportant un moyen qui est configuré pour alimenter le conducteur primaire avec un courant à moyenne fréquence,
**caractérisé en ce que**
le système comporte un moyen supplémentaire, lequel est configuré pour alimenter au moins l'un des enroulements auxiliaires (3, 4) avec une part de courant dont la plage de fréquences se situe en-dehors de la fréquence du courant à moyenne fréquence, le système comportant un calculateur (31) qui est configuré pour déterminer l'inductance de l'enroulement auxiliaire (3, 4) respectif à partir de la tension et de la part de courant associées respectives appliquées à l'enroulement auxiliaire (3, 4), et pour détecter à partir de cela la pénétration et/ou la présence de corps étrangers métalliques dans la zone entre l'enroulement auxiliaire (3, 4) et le conducteur primaire,
le calculateur (31) étant configuré pour déterminer la nature du métal au moyen de courbes caractéristiques de matériau dépendantes de la fréquence et pour déterminer la température du métal respectif,
et aussi la température du métal utilisé pour la transmission d'énergie, c'est-à-dire la température du matériau du conducteur primaire et/ou du matériau du conducteur secondaire.

2. Système selon la revendication 1, **caractérisé en ce que** le conducteur primaire (2) est façonné et/ou posé dans la zone en vis-à-vis du sol de telle sorte qu'une direction préférentielle est marquée, le conducteur primaire étant notamment disposé et configuré dans cette zone de manière symétrique par rapport à un axe de symétrie, l'axe de symétrie étant notamment orienté dans la direction préférentielle.

3. Système selon au moins l'une des revendications précédentes, **caractérisé en ce que** les bobines auxiliaires sont disposées de telle sorte que le champ alternatif magnétique généré par le conducteur primaire alimenté avec un courant alternatif induit une tension dans les enroulements auxiliaires (3, 4), notamment en vue de la détection de l'écart du véhicule par rapport à la position du véhicule à laquelle l'enroulement secondaire (2) et l'enroulement primaire présentent le couplage inductif le plus puissant.

4. Système selon au moins l'une des revendications précédentes, **caractérisé en ce que** le véhicule possède des roues avec lesquelles il peut se déplacer sur le sol dans ou sur lequel est disposé le conducteur primaire.

5. Système selon au moins l'une des revendications précédentes, **caractérisé en ce que** les enroulements auxiliaires (3, 4) et l'enroulement secondaire (2) ou l'enroulement primaire sont disposés parallèlement les uns aux autres, notamment dans le même plan.

6. Système selon au moins l'une des revendications précédentes, **caractérisé en ce que** les enroulements auxiliaires (3, 4) et l'enroulement secondaire (2) ou l'enroulement primaire ne sont pas disposés parallèlement les uns aux autres, les enroulements auxiliaires (3, 4) et l'enroulement secondaire (2) ou l'enroulement primaire étant notamment disposés perpendiculairement les uns aux autres.

7. Système selon au moins l'une des revendications précédentes, **caractérisé en ce qu'**au moins un premier et un deuxième enroulement auxiliaire (3, 4) sont façonnés de la même manière et, lors d'une rotation imaginaire d'une valeur angulaire donnée et d'une translation imaginaire, se mêlent et/ou peuvent être transférés l'un dans l'autre.

8. Système selon au moins l'une des revendications précédentes, **caractérisé en ce que**
au moins un premier enroulement auxiliaire (3) est disposé devant l'enroulement secondaire (2) ou l'enroulement primaire dans le sens du déplacement et au moins un premier enroulement auxiliaire supplémentaire (3) est disposé derrière l'enroulement secondaire (2) ou l'enroulement primaire dans le sens du déplacement et au moins un deuxième enroulement auxiliaire (4) est disposé latéralement à droite à côté de l'enroulement secondaire (2) ou de l'enroulement primaire et
au moins un deuxième enroulement auxiliaire supplémentaire (4) est disposé latéralement à gauche à côté de l'enroulement secondaire (2) ou de l'enroulement primaire.

9. Système selon au moins l'une des revendications précédentes, **caractérisé en ce que** l'enroulement secondaire (2) ou l'enroulement primaire est disposé entre deux premiers enroulements auxiliaires (3, 4), l'enroulement secondaire (2) ou l'enroulement primaire étant notamment aussi disposé entre deux enroulements auxiliaires supplémentaires (3, 4) dont la ligne de liaison croise la ligne de liaison des premiers enroulements auxiliaires (3, 4), les lignes de liaison étant notamment perpendiculaires l'une à l'autre, les lignes de liaison croisant notamment les centres de gravité respectifs des enroulements auxiliaires (3, 4).

10. Système selon au moins l'une des revendications précédentes, **caractérisé en ce qu'**en série ou en parallèle de l'enroulement secondaire (2) est branchée une capacité telle que la fréquence de résonance associée est sensiblement égale à la moyenne fréquence.

11. Système selon au moins l'une des revendications précédentes, **caractérisé en ce que** les enroulements auxiliaires (3, 4) sont disposés dans la zone du flux de retour du champ généré par l'enroulement primaire.

12. Système selon au moins l'une des revendications précédentes, **caractérisé en ce que**
l'enroulement secondaire (2) et l'enroulement primaire sont disposés en parallèle l'un de l'autre et/ou **en ce que**
les enroulements auxiliaires (3, 4) sont disposés au niveau du véhicule ou sont disposés au niveau du sol.

13. Système selon au moins l'une des revendications précédentes, **caractérisé en ce que** les signaux, notamment les tensions induites, des enroulements auxiliaires (3, 4) sont acheminés à une unité d'interprétation, laquelle est reliée à un moyen d'affichage d'un positionnement incorrect de l'enroulement secondaire (2) et/ou à un moyen servant d'aide à l'entrée en stationnement ou à une commande d'entrée en stationnement.

14. Système selon au moins l'une des revendications précédentes, **caractérisé en ce que**
au moins l'un des enroulements auxiliaires (3, 4) est alimenté avec une part de courant supplémentaire, notamment avec une part de courant à haute fréquence, notamment une part de courant supérieure dont la fréquence est supérieure à la moyenne fréquence, en vue de la transmission de données,
la deuxième part de courant possédant notamment une fréquence porteuse supérieure à un mégahertz,
et/ou **en ce que**
un enroulement auxiliaire (3, 4) relié à demeure au conducteur primaire est associé à l'enroulement auxiliaire (3, 4) destiné à la transmission de données, l'écart mutuel entre ces enroulements auxiliaires (3, 4) étant inférieur à l'écart entre l'enroulement auxiliaire (3, 4) destiné à la transmission de données et les autres enroulements, notamment dans la position optimale, c'est-à-dire la position du véhicule à laquelle le couplage inductif du conducteur primaire avec le conducteur secondaire (2) est le plus puissant.
